# EUROPEAN PATENT SPECIFICATION

(11) **EP 3 002 830 B1**
(45) Date of publication and mention of the grant of the patent: **21.10.2020**
(21) Application number: 15188097.8
(22) Date of filing: 02.10.2015
(51) Int. Cl.: H02G 3/16, H01R 9/24, H01R 24/76, H01R 13/74, H02G 3/10, H02G 3/12, H02G 3/14, H02G 3/18

(54) **MULTI-POSITION MECHANISM FOR SOCKET-OUTLETS**
MEHRSTUFIGER MECHANISMUS FÜR STECKDOSEN
MÉCANISME MULTIPOSITIONS DESTINÉ À DES PRISES DE COURANT

(30) Priority: 03.10.2014 ES 201431283 U
(43) Date of publication of application: 06.04.2016
(73) Proprietor: Simon, S.A.U., 08013 Barcelona (ES)
(72) Inventor: ACIÉN FERNÁNDEZ, JONATAN, 08013 Barcelona (ES)
(74) Representative: Balder IP Law, S.L.

(56) References cited:
- EP-A1- 0 660 461
- EP-A1- 1 667 298
- EP-A1- 1 837 959
- EP-A1- 1 837 960
- DE-A1- 19 527 013
- US-A1- 2010 227 484

## Description

### Field of the invention

The present invention refers to a multi-position mechanism for socket-outlets, especially designed to allow a horizontal or oblique arrangement of the socket-outlet holes in which the pins of a plug are introduced, with a variety of constructive solutions, such as: flush-mounting installations, installations in surface-mounting boxes, mounting on cable trunking or columns, etc. The present invention results from its application both in the domestic field, and in the tertiary sector (commerce, offices and general services).

### Background of the invention

Generally, socket-outlets intended for a domestic environment are usually mounted in flush-mounting installations, leaving the plug holes of the socket-outlet horizontally arranged.

In the tertiary sector, this type of installation shares importance with other clearly functional mounting methods. Among them, a method that can be highlighted is mounting of socket-outlets on cable trunking, wherein the plug holes of the socket-outlets are usually obliquely arranged, generally forming 45º or 135º angles. This type of installation provides an easy connection of the wiring within the cable trunking, and particularly, it optimizes the space where the pins are plugged in. Regarding the easiness of connection, the electrical conductors running inside the cable trunking come easily in and out of the connection block from one socket-outlet to the next one. Regarding optimization of the area in which the pins are plugged in, it is common to find several working stations distributed along a cable trunking, in which each one of them assembles a given number of socket-outlets. The oblique arrangement of the socket-outlet holes turns out to be the most convenient in order to assemble a higher number of considerable sized plugs, such as for example the "shucko" type, in a reduced space, without interfering to each other.

Currently, there is a clear differentiation in the market between mechanisms intended for socket-outlets provided with horizontally arranged socket-outlet holes, and mechanisms intended for socket-outlets provided with obliquely arranged socket-outlet holes. Both mechanisms are not compatible with both applications at the same time.

The present invention refers to a multi-position mechanism for socket-outlets, which makes it possible for it to be used both in flush-mounting installations provided with horizontally arranged socket-outlet holes, and exposed surface installations with obliquely arranged socket-outlet holes, thanks to a configuration that optimizes the arrangement of contacts, reduces the mechanism size and eases the connection thereof. It all results, in turn, in a highly polyvalent mechanism capable of meeting the aforementioned required specific needs present in domestic environments and in the tertiary sector. EP1837959 describes a multi-position mechanism for socket-outlets according to the preamble of claim 1.

### Description of the invention

This object of the present invention is solved by the multi-position mechanism for socket-outlets according to claim 1. Preferred embodiments are subject of the dependent claims.

The multi-position mechanism for socket-outlets of the present invention is provided with a connection block which in turn comprises:
- a first contact electrically associated to a first connection terminal configured to receive at least a first electrical conductor, according to a first insertion axis, being provided with a first socket contact configured to receive a first pin of a plug according to a first introduction axis; and
- a second contact electrically associated to a second connection terminal configured to receive at least a second electrical conductor according to a second insertion axis, being provided with a second socket contact configured to receive a second pin of a plug according to a second introduction axis.

The connection block comprises a housing element configured to accommodate the contacts according to a longitudinal axis thereof, the socket contacts becoming aligned over an axis in oblique orientation with respect to the insertion axes.

Additionally, the connection block may comprise:
- a third contact electrically associated to a third connection terminal configured to receive at least a third electrical conductor according to a third electrical conductor according to a third insertion axis.

The housing element is internally divided by:
- a first compartment configured to accommodate the first contact; and
- a second compartment configured to accommodate the second contact, electrically insulated from the first compartment.

The first compartment is in turn divided into a first main cavity configured to accommodate a first contact bridge electrically joined to the first connection terminal, and into a first auxiliary cavity configured to accommodate the first socket contact. Likewise, the second compartment is in turn divided into a second main cavity configured to accommodate a second contact bridge electrically joined to the second connection terminal and into a second auxiliary cavity configured to accommodate the second socket contact.

Preferably, the first auxiliary cavity comprises a first broadened section oriented towards the second compartment, whereas the second auxiliary cavity comprises a second broadened section oriented towards the first compartment.

In case of being provided with a third contact, the housing element is also divided interiorly by:
- a third compartment configured to accommodate the third contact, arranged between the first compartment and the second compartment, and being electrically insulated from the first compartment and the second compartment.

Preferably, the first contact and the second contact are each formed by:
- a bridge section electrically linked to a connection terminal; and
- a linking section joined to the bridge section in an "L-shaped" configuration, at the end of which the socket contact is located.

Preferably, the first contact and the second contact are accommodated within the housing element in a symmetrically inverted arrangement.

Preferably, the introduction axes are substantially perpendicular to the longitudinal axis and/or perpendicular to the insertion axes.

Each of the insertion axes forms an angle larger than 0º and smaller than 90º with respect to the orientation axis, according to the smallest angle it forms with each one of the axes, although the obliquity of said insertion axes with respect to the orientation axis is functionally more advantageous when the angle ranges between 35º and 55º, and most preferably when it is 45º.

The multi-position mechanism for sockets of the present invention additionally comprises a receiving block attachable to the connection block, which is configured to receive the plug pins and enable to fix the mechanism to a socket cover. Preferably, the receiving block comprises:
- a lower wall laterally delimited by a side wall, featuring a first orifice and a second orifice oriented respectively with the first socket contact and the second socket contact;
- a plurality of fixing elements configured to be fixed on a frame, being possible for the connection block to be arranged in an oblique position with the orientation axis in horizontal position;
- a plurality of attaching elements configured to be attached onto a cable trunking, being possible to arrange the connection block in vertical position with the orientation axis in oblique position.

The receiving block comprises an earth connection configured to connect the third contact.

The configuration described above is highly compact and robust, eases the wiring connection and offers a reduced size design which can be applied to a great number of constructive solutions.

### Brief description of the drawings

The following is a brief description of a series of drawings which will help understand the invention better specifically relating to five embodiments of said invention which is presented as a non-limiting example thereof.
Figure 1 represents an exploded perspective view of a socket-outlet incorporating the mechanism of the present invention.
Figure 2 represents a perspective view of the connection block.
Figure 3 represents a perspective view of the connection block coupled to the receiving block.
Figure 4 represents a front view of a socket-outlet with the mechanism of the present invention, according to a first embodiment for applications in flush-mounting installations and socket-outlet holes horizontally arranged.
Figure 5 represents a plant view of the socket-outlet in figure 4, showing a cut in the flush-mounting box so as to show part of the mechanism interior.
Figure 6 represents a rear view of the socket-outlet, sectioned according to a cutting line A-A of figure 5.
Figure 7 represents a front view of a cable trunking section having a socket-outlet with the mechanism of the invention, according to a second embodiment for the application thereof in installations on cable trunking and socket-outlet holes arranged obliquely.
Figure 8 represents a perspective view of the socket-outlet of figure 7.

### Detailed description of the invention

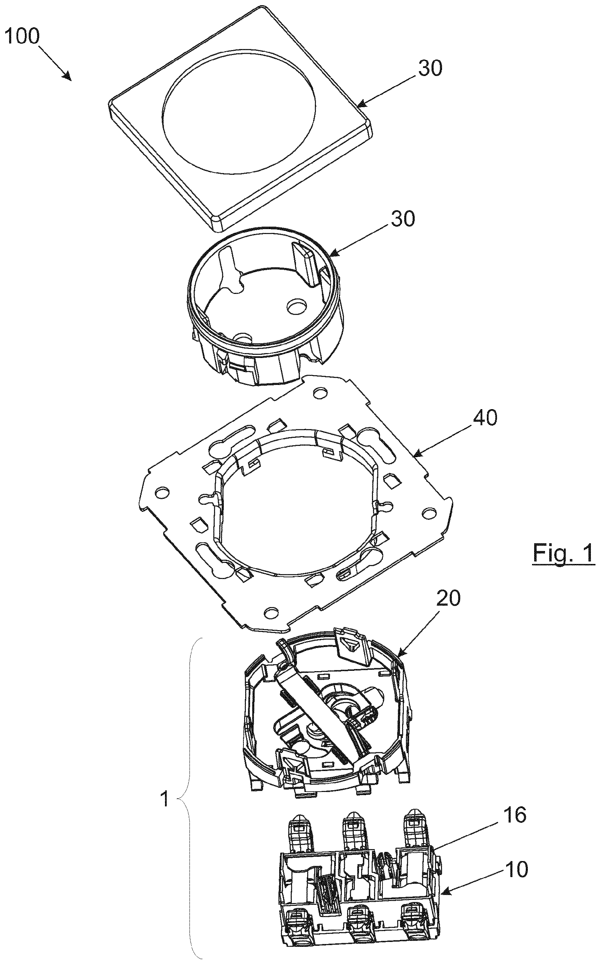

Figure 1 shows an exploded perspective view of a socket-outlet (100) incorporating the mechanism (1) of the present invention. As it can be appreciated, the mechanism (1) comprises a connection block (10) and a receiving block (20) configured to allow fixing thereof to a socket cover (30). Likewise, the figure shows a support frame (40) on which the mechanism is mounted (1) to facilitate the installation thereof on flush-mounting boxes, surface-mounting boxes or other connection and/or distribution elements which require this type of fixing elements.

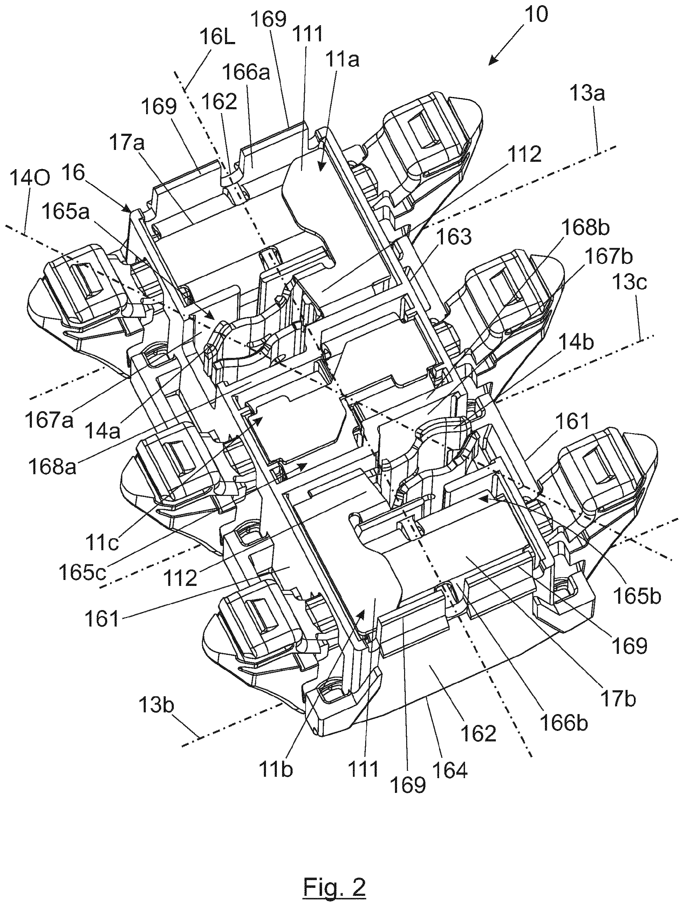

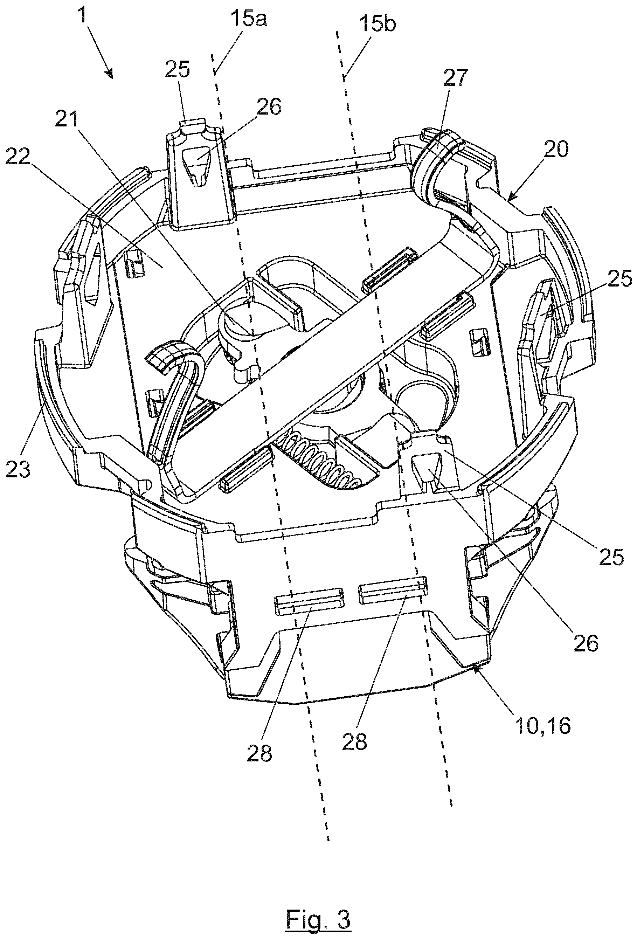

Figure 2 shows a perspective view of the connection block (10) in which the configuration thereof can be appreciated in further detail. As it can be appreciated, the connection block (10) comprises:
- a first contact (11a) electrically associated to a first connection terminal (12a) configured to receive at least a first electrical conductor, not shown, according to a first insertion axis (13a), wherein said first contact (11a) is provided with a first socket contact (14a) configured to receive a first plug pin, not shown, according to a first introduction axis (15a), figure3; and
- a second contact (11b) electrically associated to a second connection terminal (12b) configured to receive at least a second electrical conductor, not shown, according to a second insertion axis (13b), wherein said second contact (11b) is provided with a second socket contact (14b) configured to receive a second pin of said plug, not shown, according to a second introduction axis (15b), figure 3.

The connection block (10) comprises a housing element (16) configured to accommodate the contacts (11a, 11b) along a longitudinal axis (16L) thereof, the socket contacts (14a, 14b) becoming aligned on an orientation axis (14O) oblique to the insertion axes (13a, 13b), and according to the present example, also oblique to the longitudinal axis (16L).

The connection block (10) comprises:
- a third contact (11c) electrically associated to a third connection terminal (12c) configured to receive at least an electrical conductor, not shown, according to a third insertion axis (13c).

The housing element (16) is laterally delimited by two longitudinal walls (161) parallel to the longitudinal axis (16L) and two cross-sectional walls (162), wherein said walls define a substantially rectangular contour having an upper opening (163), and closed at the bottom thereof by a closing wall (164). Thus, the housing element features a shape similar to an orthogonal parallelepiped.

The housing element (16) is internally divided by:
- a first compartment (165a) configured to accommodate the first contact (11a); and
- a second compartment (165b) configured to accommodate the second contact (11b), electrically insulated from the first compartment (165a).

The first compartment (165a) is in turn divided into a first main cavity (166a) configured to accommodate a first contact bridge (17a) electrically joined to the first connection terminal (12a), and into a first auxiliary cavity (167a) configured to accommodate the first socket contact (14a). Likewise, the second compartment (165b) is in turn divided into a second main cavity (166b) configured to accommodate a second contact bridge (17b) electrically joined to the second connection terminal (12b) and into a second auxiliary cavity (167b) configured to accommodate the second socket contact (14b).

The first auxiliary cavity (167a) comprises a first broadened section (168a) oriented towards the second compartment (165b), whereas the second auxiliary cavity (167b) comprises a second broadened section (168b) oriented towards the first compartment (165a).

The housing element (16) is also divided interiorly by:
- a third compartment (165c) configured to accommodate the third contact (11c), arranged between the first compartment (165a) and the second compartment (165b), and being electrically insulated from the first compartment (165a) and the second compartment (165b).

The first contact (11a) and the second contact (11b) are each formed by:
- a bridge section (111) electrically linked to a connection terminal (12a, 12b); and
- a linking section (112) joined to the bridge section (111) in an "L-shaped" configuration, at the end of which the socket contact (14a, 14b) is located.

According to the present embodiment example, the first contact (11a) and the second contact (11b) are accommodated within the housing element (16) in a symmetrically inverted arrangement.

Figure 3 shows a perspective view of the connection block (10) coupled to a receiving block. As it can be appreciated, the receiving block (20) is coupled to the connection block (10). According to the present embodiment example, said coupling is carried out by means of anchoring flanges (169) arranged on the housing element (16), figure 2, configured to be anchored to the openings (28) of the receiving block (20). Thus, the connection block (10) can be decoupled from the receiving block (20) using tools, and it can be easily coupled again without using said tools.

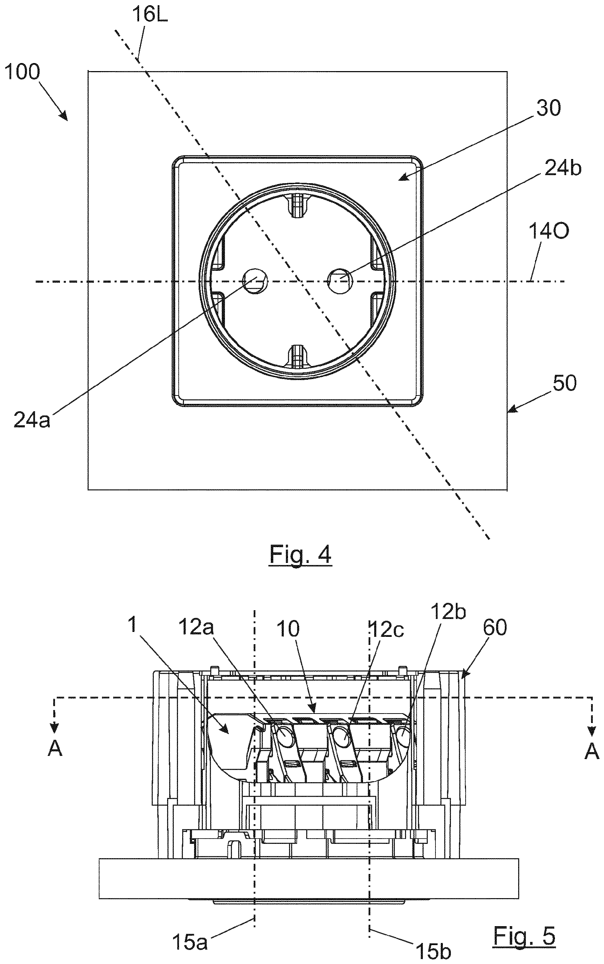

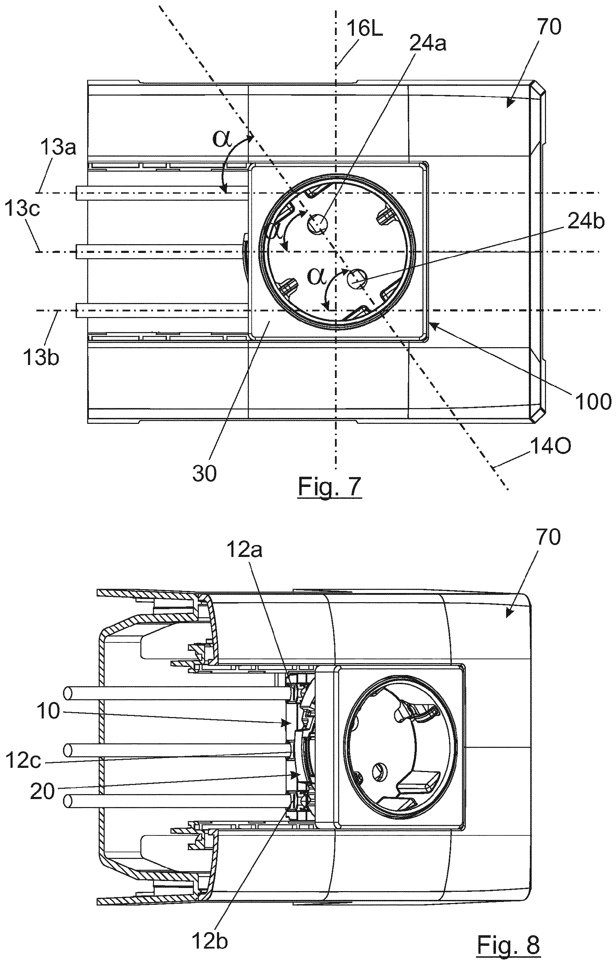

The receiving block (20) comprises:
- a lower wall (22) laterally delimited by a side wall (23), featuring a first orifice (24a) and a second orifice (24b), figures 4 and 7, oriented respectively with the first socket contact hole (14a) and the second socket contact (14b);
- a plurality of fixing elements (25) configured to be fixed on a support frame (40), being possible for the connection block (10) to be arranged in an oblique position with the orientation axis (140) in horizontal position, figures 4-6;
- a plurality of attaching elements (26) configured to be attached onto a cable trunking (70), being possible to arrange the connection block (10) in vertical position with the orientation axis (140) in oblique position, figures 7-8.

The first orifice (24a) and the second orifice (24b) are covered in figure 3 by means of a shutter device (21) designed for security reasons to prevent undesired objects from entering.

The receiving block (20) comprises an earth connection (27) configured to connect the third contact (11c).

The configuration described above is highly compact and robust, eases the wiring connection and offers a reduced size design which can be applied to a great number of constructive solutions, as it can be appreciated in the following figures.

Figures 4, 5 and 6 represent respectively a front view, a plant view and a sectional rear view of a socket-outlet (100) incorporating the mechanism (1) of the present invention, according to a first embodiment for being applied in flush-mounting installations and socket-outlet holes horizontally arranged. As it can be appreciated, the mechanism (1) is accommodated inside a flush-mounting box (60), and fixed thereto by means of a support frame (40) onto which a cover frame (50) is also attached.

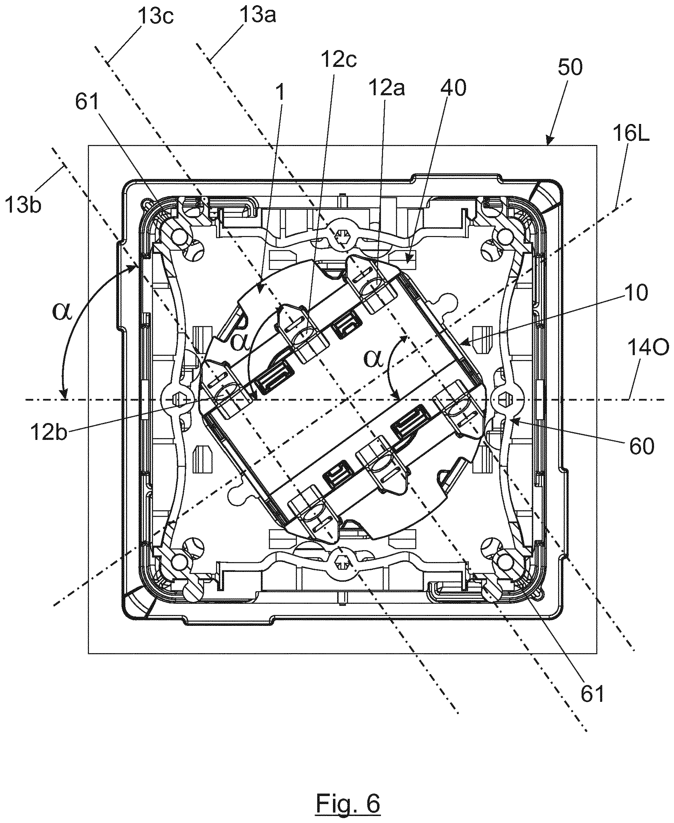

In Figure 6 it can be clearly appreciated that the connection block (10) is in an oblique position, at more or less 45º (smaller angle), being the orientation axis (140) in horizontal position. Thus, the connection terminals (12a, 12b, 12c) become oriented towards two of the corners (61) of the flush-mounting box (60). This is particularly advantageous for the connection, since orienting the terminals (12a, 12b, 12c) towards the corners (61) more space is obtained to accommodate the electrical conductors, with respect to an orientation of said terminals (12a, 12b, 12c) towards the walls, a situation in which the conductors would be twisted and would suffer more stress.

As it can be appreciated, the insertion axes (13a, 13b, 13c) are substantially perpendicular to the longitudinal axis (16L). At the same time, the introduction axes (15a, 15b) are substantially perpendicular to the longitudinal axis (16L) and to the insertion axes (13a, 13b, 13c). Each of the insertion axes (13a, 13b, 13c) forms an angle (α) of about 45º with respect to the orientation axis (140).

Figures 7 and 8 show respectively a front view and a perspective view of the section of a cable trunking (70) comprising a socket-outlet (100) with the mechanism (1) of the present invention, according to a second embodiment for the application thereof in installations on cable trunking and socket-outlet holes arranged obliquely.

In Figure 8 it can be clearly appreciated that the connection block (10) is in vertical position, at about more or less 90º, being the orientation axis (140) in oblique position. Thus, the connection terminals (12a, 12b, 12c) are perpendicular to the running direction of the electrical conductors, which is in turn parallel to the insertion axes (13a, 13b, 13c). This is especially advantageous, since the electrical conductors come easily in and out of the connection block (10) from one socket-outlet (100) to the other.

As it can be appreciated, the insertion axes (13a, 13b, 13c) are substantially perpendicular to the longitudinal axis (16L). At the same time, the introduction axes (15a, 15b) are substantially perpendicular to the longitudinal axis (16L) and to the insertion axes (13a, 13b, 13c). Each of the insertion axes (13a, 13b, 13c) form an angle (α) of about 45º with respect the orientation axis (140).

## Claims

1. Multi-position mechanism for socket-outlets (100), comprising a connection block (10) and a receiving block (20) attached to the connection block (10), the connection block (10) having:
- a first contact (11a) electrically associated to a first connection terminal (12a) configured to receive at least a first electrical conductor according to a first insertion axis (13a), being provided with a first socket contact (14a) configured to receive a first plug pin according to a first introduction axis (15a); and
- a second contact (11b) electrically associated to a second connection terminal (12b) configured to receive at least a second electrical conductor according to a second insertion axis (13b), being provided with a second socket contact (14b) configured to receive a second plug pin according to a second introduction axis (15b);
said mechanism (1) **characterized in that** the connection block (10) comprises a housing element (16) configured to accommodate the first and second contacts (11a, 11b) according to a longitudinal axis (16L) thereof, the first and the second socket contacts (14a, 14b) being aligned on an orientation axis (140) oblique to the insertion axes (13a, 13b), and wherein the receiving block comprises a lower wall (22) laterally delimited by a side wall (23), featuring a first orifice (24a) and a second orifice (24b) oriented respectively with the first socket contact (14a) and the second socket contact (14b), the orifices and the socket contacts forming socket outlet holes, the insertion axes (13a, 13b, 13c) being perpendicular to the longitudinal axis (16L), and wherein the housing element (16) is laterally delimited by two longitudinal walls (161) parallel to the longitudinal axis (16L) and two cross-sectional walls (162), defining a substantially rectangular contour having an upper opening (163); and **in that** it is closed at the bottom thereof by a closing wall (164).

2. Multi-position mechanism for socket-outlets according to claim 1 **characterized in that** the connection block (10) comprises:
- a third contact (11c) electrically associated to a third connection terminal (12c) configured to receive at least an electrical conductor according to a third insertion axis (13c).

3. Multi-position mechanism for socket-outlets according to any of claims 1 to 2 **characterized in that** the housing element (16) is internally divided by:
- a first compartment (165a) configured to accommodate the first contact (11a); and
- a second compartment (165b) configured to accommodate the second contact (11b), electrically insulated from the first compartment (165a).

4. Multi-position mechanism for socket-outlets according to claim 3 **characterized in that** the first compartment (165a) is in turn divided into a first main cavity (166a) configured to accommodate a first contact bridge (17a) electrically joined to the first connection terminal (12a) and into a first auxiliary cavity (167a) configured to accommodate the first socket contact (14a); and **in that** the second compartment (165b) is in turn divided into a second main cavity (166b) configured to accommodate a second contact bridge (17b) electrically joined to the second connection terminal (12b) and into a second auxiliary cavity (167b) configured to accommodate the second socket contact (14b).

5. Multi-position mechanism for socket-outlets according to claim 4 **characterized in that** the first auxiliary cavity (167a) comprises a first broadened section (168a), oriented towards the second compartment (165b); and **in that** the second auxiliary cavity (167b) comprises a second broadened section (168b) oriented towards the first compartment (165a).

6. Multi-position mechanism for socket-outlets according to claim 3 **characterized in that** the housing element (16) is also divided interiorly by:
- a third compartment (165c) configured to accommodate the third contact (11c), arranged between the first compartment (165a) and the second compartment (165b), and being electrically insulated from the first compartment (165a) and the second compartment (165b).

7. Multi-position mechanism for socket-outlets according to any of claims 1 to 6 **characterized in that** the first contact (11a) and the second contact (11b) are each formed by:
- a bridge section (111) electrically linked to a connection terminal (12a, 12b); and
- a linking section (112) joined to the bridge section (111) in an "L-shaped" configuration, at the end of which the socket contact (14a, 14b) is located.

8. Multi-position mechanism for socket-outlets according to any of claims 1 to 7 **characterized in that** the first contact (11a) and the second contact (11b) are accommodated within the housing element (16) in a symmetrically inverted arrangement.

9. Multi-position mechanism for socket-outlets according to any of claims 1 to 8 **characterized in that** the introduction axes (15a, 15b) are perpendicular to the longitudinal axis (16L).

10. Multi-position mechanism for socket-outlets according to any of claims 1 to 9 **characterized in that** the introduction axes (15a, 15b) are perpendicular to the insertion axes (13a, 13b, 13c).

11. Multi-position mechanism for socket-outlets according to any of claims 1 to 10 **characterized in that** each of the insertion axes (13a, 13b, 13c) forms an angle (α) larger than 0° and smaller than 90° with respect to the orientation axis (140).

12. Multi-position mechanism for socket-outlets according to claim 11 **characterized in that** each of the insertion axes (13a, 13b, 13c) forms an angle (α) between 35° and 55° with respect to the orientation axis (140).

13. Multi-position mechanism for socket-outlets according to any of claims 1 to Z 12 **characterized in that** the receiving block (20) comprises:
- a plurality of fixing elements (25) configured to be fixed on a support frame (40); and
- a plurality of attaching elements (26) configured to be attached onto a cable trunking (70).

## Patentansprüche

1. Mehrpositions-Mechanismus für Steckdosen (100), umfassend einen Verbindungsblock (10) und einen an dem Verbindungsblock (10) befestigten Aufnahmeblock (20), wobei der Verbindungsblock (10) Folgendes aufweist:
- einen mit einer ersten Anschlussklemme (12a) elektrisch verbundenen ersten Kontakt (11a), der dazu ausgebildet ist, mindestens einen ersten elektrischen Leiter gemäß einer ersten Einsetzachse (13a) aufzunehmen, und mit einem ersten Buchsenkontakt (14a) versehen ist, der dazu ausgebildet ist, einen ersten Steckerstift gemäß einer ersten Einführachse (15a) aufzunehmen; und
- einen mit einer zweiten Anschlussklemme (12b) elektrisch verbundenen zweiten Kontakt (11b), der dazu ausgebildet ist, mindestens einen zweiten elektrischen Leiter gemäß einer zweiten Einsetzachse (13b) aufzunehmen, und mit einem zweiten Buchsenkontakt (14b) versehen ist, der dazu ausgebildet ist, einen zweiten Steckerstift gemäß einer zweiten Einführachse (15b) aufzunehmen;
wobei der Mechanismus (1) **dadurch gekennzeichnet ist, dass** der Verbindungsblock (10) ein Gehäuseelement (16) aufweist, das dazu ausgebildet ist, den ersten und den zweiten Kontakt (11a 11b) gemäß einer Längsachse (16L) desselben aufzunehmen, wobei der erste und der zweite Buchsenkontakt (14a, 14b) an einer Orientierungsachse (140) ausgerichtet sind, die schräg zu den Einsetzachsen (13a, 13b) verläuft, und wobei der Aufnahmeblock eine untere Wand (22) aufweist, die seitlich durch eine Seitenwand (23) begrenzt ist, mit einer ersten Öffnung (24a) und einer zweiten Öffnung (24b), die jeweils auf den ersten Buchsenkontakt (14a) und den zweiten Buchsenkontakt (14b) ausgerichtet sind, wobei die Öffnungen und die Buchsenkontakte Steckdosenlöcher bilden, wobei die Einsetzachsen (13a, 13b, 13c) zu der Längsachse (16L) senkrecht sind, und wobei das Gehäuseelement (16) seitlich durch zwei zur Längsachse (16L) parallele Längswände (161) und zwei Querschnittswände (162) begrenzt ist, die einen im Wesentlichen rechteckigen Umriss mit einer oberen Öffnung (163) definieren; und dass er an seinem Boden durch eine Abschlusswand (164) verschlossen ist.

2. Mehrpositions-Mechanismus für Steckdosen nach Anspruch 1, **dadurch gekennzeichnet, dass** der Verbindungsblock (10) Folgendes aufweist:
- einen dritten Kontakt (11c), der mit einer dritten Anschlussklemme (12c) elektrisch verbunden ist, die dazu ausgebildet ist, mindestens einen elektrischen Leiter gemäß einer dritten Einsetzachse (13c) aufzunehmen.

3. Mehrpositions-Mechanismus für Steckdosen nach einem der Ansprüche 1 bis 2, **dadurch gekennzeichnet, dass** das Gehäuseelement (16) innen unterteilt ist durch:
- eine erste Kammer (165a), die dazu ausgebildet ist, den ersten Kontakt (11a) aufzunehmen; und
- eine zweite Kammer (165b), die dazu ausgebildet ist, den zweiten Kontakt (11b) aufzunehmen, der von der ersten Kammer (165a) elektrisch isoliert ist.

4. Mehrpositions-Mechanismus für Steckdosen nach Anspruch 3, **dadurch gekennzeichnet, dass** die erste Kammer (165a) wiederum unterteilt ist in einen ersten Haupthohlraum (166a), der dazu ausgebildet ist, eine erste Kontaktbrücke (17a) aufzunehmen, die mit der ersten Anschlussklemme (12a) elektrisch verbunden ist, und in einen ersten Hilfshohlraum (167a), der dazu ausgebildet ist, den ersten Buchsenkontakt (14a) aufzunehmen; und dass die zweite Kammer (165b) wiederum unterteilt ist in einen zweiten Haupthohlraum (166b), der dazu ausgebildet ist, eine zweite Kontaktbrücke (17b) aufzunehmen, die mit der zweiten Anschlussklemme (12b) elektrisch verbunden ist, und in einen zweiten Hilfshohlraum (167b), der dazu ausgebildet ist, den zweiten Buchsenkontakt (14b) aufzunehmen.

5. Mehrpositions-Mechanismus für Steckdosen nach Anspruch 4, **dadurch gekennzeichnet, dass** der erste Hilfshohlraum (167a) einen ersten verbreiterten Abschnitt (168a) aufweist, der zu der zweiten Kammer (165b) hin gerichtet ist; und dass der zweite Hilfshohlraum (167b) einen zweiten verbreiterten Abschnitt (168b) aufweist, der zu der ersten Kammer (165a) hin gerichtet ist.

6. Mehrpositions-Mechanismus für Steckdosen nach Anspruch 3, **dadurch gekennzeichnet, dass** das Gehäuseelement (16) innen außerdem unterteilt ist durch:
- eine dritte Kammer (165c), die zwischen der ersten Kammer (165a) und der zweiten Kammer (165b) angeordnet ist, und von der ersten Kammer (165a) und der zweiten Kammer (165b) elektrisch isoliert ist und die dazu ausgebildet ist, den dritten Kontakt (11c) aufzunehmen.

7. Mehrpositions-Mechanismus für Steckdosen nach einem der Ansprüche 1 bis 6, **dadurch gekennzeichnet, dass** der erste Kontakt (11a) und der zweite Kontakt (11b) jeweils gebildet sind durch:
- einen Brückenabschnitt (111), der mit einer Anschlussklemme (12a, 12b) elektrisch verbunden ist; und
- einen Verbindungsabschnitt (112), der mit dem Brückenabschnitt (111) an dem Ende, an dem sich der Buchsenkontakt (14a, 14b) befindet, in einer "L-förmigen" Konfiguration verbunden ist.

8. Mehrpositions-Mechanismus für Steckdosen nach einem der Ansprüche 1 bis 7, **dadurch gekennzeichnet, dass** der erste Kontakt (11a) und der zweite Kontakt (11b) in einer symmetrieinvertierten Anordnung in dem Gehäuseelement (16) aufgenommen sind.

9. Mehrpositions-Mechanismus für Steckdosen nach einem der Ansprüche 1 bis 8, **dadurch gekennzeichnet, dass** die Einführachsen (15a, 15b) zu der Längsachse (16L) senkrecht sind.

10. Mehrpositions-Mechanismus für Steckdosen nach einem der Ansprüche 1 bis 9, **dadurch gekennzeichnet, dass** die Einführachsen (15a, 15b) zu den Einsetzachsen (13a, 13b, 13c) senkrecht sind.

11. Mehrpositions-Mechanismus für Steckdosen nach einem der Ansprüche 1 bis 10, **dadurch gekennzeichnet, dass** jede der Einsetzachsen (13a, 13b, 13c) einen Winkel (α) bildet, der in Bezug auf die Orientierungsachse (140) größer als 0° und kleiner als 90° ist.

12. Mehrpositions-Mechanismus für Steckdosen nach Anspruch 11, **dadurch gekennzeichnet, dass** jede der Einsetzachsen (13a, 13b, 13c) einen Winkel (α) zwischen 35° und 55° in Bezug auf die Orientierungsachse (140) bildet.

13. Mehrpositions-Mechanismus für Steckdosen nach einem der Ansprüche 1 bis 12, **dadurch gekennzeichnet, dass** der Aufnahmeblock (20) Folgendes aufweist:
- eine Vielzahl von Befestigungselemente (25), die dazu ausgebildet sind, an einem Tragrahmen (40) befestigt zu werden; und
- eine Vielzahl von Befestigungselementen (26), die dazu ausgebildet sind, an einem Kabelkanal (70) zu befestigt werden.

## Revendications

1. Mécanisme multi-positions pour prises de courant (100), comprenant un bloc de connexion (10) et un bloc de réception (20) attaché au bloc de connexion (10), le bloc de connexion (10) ayant :
- un premier contact (11a) associé électriquement à une première borne de connexion (12a) configurée pour recevoir au moins un premier conducteur électrique selon un premier axe d'insertion (13a), pourvu d'un premier contact femelle (14a) configuré pour recevoir une première fiche mâle selon un premier axe d'introduction (15a) ; et
- un deuxième contact (11b) associé électriquement à une deuxième borne de connexion (12b) configurée pour recevoir au moins un deuxième conducteur électrique selon un deuxième axe d'insertion (13b), pourvu d'un deuxième contact femelle (14b) configuré pour recevoir une deuxième fiche mâle selon un deuxième axe d'introduction (15b) ;
ledit mécanisme (1) étant **caractérisé en ce que** le bloc de connexion (10) comprend un élément de logement (16) configuré pour recevoir les premier et deuxième contacts (11a, 11b) selon un axe longitudinal (16L) de celui-ci, les premier et deuxième contacts femelles (14a, 14b) étant alignés sur un axe d'orientation (140) oblique par rapport aux axes d'insertion (13a, 13b), et dans lequel le bloc de réception comprend une paroi inférieure (22) délimitée latéralement par une paroi latérale (23), présentant un premier orifice (24a) et un deuxième orifice (24b) orientés respectivement avec le premier contact femelle (14a) et le deuxième contact femelle (14b), les orifices et les contacts femelles formant des trous de prise de courant, les axes d'insertion (13a, 13b, 13c) étant perpendiculaires à l'axe longitudinal (16L), et dans lequel l'élément de logement (16) est délimité latéralement par deux parois longitudinales (161) parallèles à l'axe longitudinal (16L) et deux parois en section transversale (162), définissant un contour sensiblement rectangulaire ayant une ouverture supérieure (163) ; et **en ce qu'**il est fermé au niveau de son fond par une paroi de fermeture (164).

2. Mécanisme multi-positions pour prises de courant selon la revendication 1 **caractérisé en ce que** le bloc de connexion (10) comprend :
- un troisième contact (11c) associé électriquement à une troisième borne de connexion (12c) configurée pour recevoir au moins un conducteur électrique selon un troisième axe d'insertion (13c).

3. Mécanisme multi-positions pour prises de courant selon l'une quelconque des revendications 1 à 2 **caractérisé en ce que** l'élément de logement (16) est divisé intérieurement par :
- un premier compartiment (165a) configuré pour recevoir le premier contact (11a) ; et
- un deuxième compartiment (165b) configuré pour recevoir le deuxième contact (11b), isolé électriquement du premier compartiment (165a).

4. Mécanisme multi-positions pour prises de courant selon la revendication 3 **caractérisé en ce que** le premier compartiment (165a) est à son tour divisé en une première cavité principale (166a) configurée pour recevoir un premier pont de contact (17a) joint électriquement à la première borne de connexion (12a) et en une première cavité auxiliaire (167a) configurée pour recevoir le premier contact femelle (14a) ; et **en ce que** le deuxième compartiment (165b) est à son tour divisé en une deuxième cavité principale (166b) configurée pour recevoir un deuxième pont de contact (17b) joint électriquement à la deuxième borne de connexion (12b) et en une deuxième cavité auxiliaire (167b) configurée pour recevoir le deuxième contact femelle (14b).

5. Mécanisme multi-positions pour prises de courant selon la revendication 4 **caractérisé en ce que** la première cavité auxiliaire (167a) comprend une première section élargie (168a), orientée vers le deuxième compartiment (165b) ; et **en ce que** la deuxième cavité auxiliaire (167b) comprend une deuxième section élargie (168b) orientée vers le premier compartiment (165a).

6. Mécanisme multi-positions pour prises de courant selon la revendication 3 **caractérisé en ce que** l'élément de logement (16) est également divisé à l'intérieur par :
- un troisième compartiment (165c) configuré pour recevoir le troisième contact (11c), agencé entre le premier compartiment (165a) et le deuxième compartiment (165b), et étant électriquement isolé du premier compartiment (165a) et du deuxième compartiment (165b).

7. Mécanisme multi-positions pour prises de courant selon l'une quelconque des revendications 1 à 6 **caractérisé en ce que** le premier contact (11a) et le deuxième contact (11b) sont chacun formés par :
- une section de pont (111) reliée électriquement à une borne de connexion (12a, 12b) ; et
- une section de liaison (112) jointe à la section de pont (111) dans une configuration en "L", au niveau de l'extrémité de laquelle se situe le contact femelle (14a, 14b).

8. Mécanisme multi-positions pour prises de courant selon l'une quelconque des revendications 1 à 7 **caractérisé en ce que** le premier contact (11a) et le deuxième contact (11b) sont reçus dans l'élément de logement (16) selon un agencement symétriquement inversé.

9. Mécanisme multi-positions pour prises de courant selon l'une quelconque des revendications 1 à 8 **caractérisé en ce que** les axes d'introduction (15a, 15b) sont perpendiculaires à l'axe longitudinal (16L).

10. Mécanisme multi-positions pour prises de courant selon l'une quelconque des revendications 1 à 9 **caractérisé en ce que** les axes d'introduction (15a, 15b) sont perpendiculaires aux axes d'insertion (13a, 13b, 13c).

11. Mécanisme multi-positions pour prises de courant selon l'une quelconque des revendications 1 à 10 **caractérisé en ce que** chacun des axes d'insertion (13a, 13b, 13c) forme un angle (α) supérieur à 0° et inférieur à 90° par rapport à l'axe d'orientation (140).

12. Mécanisme multi-positions pour prises de courant selon la revendication 11 **caractérisé en ce que** chacun des axes d'insertion (13a, 13b, 13c) forme un angle (α) compris entre 35° et 55° par rapport à l'axe d'orientation (140).

13. Mécanisme multi-positions pour prises de courant selon l'une quelconque des revendications 1 à 12 **caractérisé en ce que** le bloc de réception (20) comprend :
- une pluralité d'éléments de fixation (25) configurés pour être fixés sur un cadre de support (40) ; et
- une pluralité d'éléments d'attache (26) configurés pour être attachés sur une jonction de câbles (70).
